# EUROPÄISCHE PATENTSCHRIFT

(11) **EP 0 684 109 B1**
(45) Veröffentlichungstag und Bekanntmachung des Hinweises auf die Patenterteilung: **02.06.1999**
(21) Anmeldenummer: 95810146.1
(22) Anmeldetag: 08.03.1995
(51) Int. Cl.: B25D 17/08

(54) **Bohr- und/oder Meisselgerät**
Drilling and/or chiseling tool
Outil pour forer et/ou ciseler

(30) Priorität: 24.05.1994 DE 4418103
(43) Veröffentlichungstag der Anmeldung: 29.11.1995
(73) Patentinhaber: HILTI Aktiengesellschaft, 9494 Schaan (LI)
(72) Erfinder: Neumaier, Anton, D-82256 Fürstenfeldbruck (DE)
(74) Vertreter: Wildi, Roland

(56) Entgegenhaltungen:
- EP-A- 0 298 027
- DE-A- 3 328 886
- DE-A- 4 210 911
- DE-U- 9 305 463
- GB-A- 2 103 988

## Beschreibung

Die Erfindung betrifft ein Bohr- und/oder Meisselgerät mit einem Gehäuse, einem Werkzeughalter, einer das Gehäuse in Richtung Werkzeughalter überragenden Kolbenführung, einer den Werkzeughalter umgebenden, gegenüber diesem zumindest teilweise verdrehbaren Kappe sowie einer gegen die Kraft einer Feder axial versetzbaren Verriegelungshülse, wobei die Kolbenführung und der Werkzeughalter über wenigstens ein radial versetzbares, in wenigstens eine Ausnehmung der Kolbenführung eingreifendes und in einer Durchtrittsöffnung des Werkzeughalters gelagertes Verriegelungselement miteinander verbunden sind die Verriegelungshülse wenigstens eine Längsrichtung der Verriegelungshülse verlaufende Vertiefung für das Verriegelungselement aufweist und das Verriegelungselement mittels der axial versetzbaren Verriegelungshülse radial versetzbar ist.

Ein Bohr- und/oder Meisselgerät der oben genannten Art ist aus der DE-A-35 11 491 bekannt. Damit das Ausrichten eines in dem Werkzeughalter eingesetzten Werkzeuges ermöglicht werden kann, muss der Werkzeughalter zusammen mit dem Werkzeug gegenüber der Kolbenführung in Umfangsrichtung verdreht werden. Die Verdrehung des Werkzeughalters kann erfolgen, wenn die Verriegelungshülse verschoben wie Die in Durchtrittsöffnungen des Werkzeughalters gelagerten Verriegelungselemente können dadurch radial nach aussen rücken, so dass sie nicht mehr in die Ausnehmungen der Kolbenführung ragen. Beim axialen Verschieben der Verriegelungshülse muss die Bedienungsperson jedoch immer darauf achten, dass der Werkzeughalter nicht von der Kolbenführung angezogen wird, wenn die Verriegelungselemente nicht mehr in die Ausnehmungen der Kolbenführung ragen.

Aus der DE-A-4210911 ist eine Werkzeugaufnahme für ein Bohr- und Meisselgerät mit einem Werkzeughalter bekannt, der zwei Aufnahmeöffnungen aufweist. Im Bereich jeder Aufnahmeöffnung ist wenigstens eine im wesentlichen radial verlaufende Durchtrittsöffnung angeordnet, in der mit Hilfe einer den Werkzeughalter umgebenden, axial versetzbaren Kappe sowie einer den Werkzeughalter umgebenden axial versetzbaren Verriegelungshülse ein Verriegelungselement im wesentlichen radial versetzbar ist. Ein der Verriegelung eines eingesteckten Werkzeuges dienendes Verriegelungselement ist stiftförmig und das weitere in einer Durchtrittsöffnung des Werkzeughalters gelagertes Verriegelungselement ist kugelförmig ausgebildet. Die Kappe und die Verriegelungshülse werden über eine Druckfeder auseinandergedrückt und in ihrer Verriegelungsstellung gehalten.

Der Erfindung liegt die Aufgabe zugrunde, ein Bohr- und/oder Meisselgerät zu schaffen, bei dem ein Verdrehen des Werkzeughalters in Umfangsrichtung möglich ist, ohne dass gleichzeitig eine Abnahme des Werkzeughalters von der Kolbenführung stattfinden kann.

Erfindungsgemäss wird dies dadurch erreicht, dass die Verriegelungshülse und das Gehäuse miteinander in Eingriff bringbare Verzahnungen aufweisen.

Die drehfeste Anordnung des Werkzeughalters gegenüber dem Gehäuse erfolgt somit über die axial versetzbare Verriegelungshülse, welche drehfest mit dem Gehäuse in Verbindung bringbar ist.

Zweckmässigerweise ist die Verzahnung an dem Gehäuse als in Längsrichtung der Verriegelungshülse verlaufende Aussenverzahnung und die Verzahnung an der Verriegelungshülse als in Längsrichtung der Verriegelungshülse verlaufende Innenverzahnung ausgebildet. Die Verriegelungshülse wird mit Hilfe einer Feder in einer Ausgangsstellung gehalten, in der die Vernegelungshülse an der Stimseite des Gehäuses anliegt. In dieser Ausgangsposition überlappen sich beide Verzahnungen, so dass eine drehfeste Verbindung zwischen der Verriegelungshülse und dem Gehäuse besteht. Durch axiales Versetzen der Verriegelungshülse gegen die Kraft der Feder in Schlagrichtung können beide Verzahnungen ausser Eingriff gebracht werden, so dass sich die Verriegelungshülse zusammen mit dem Werkzeughalter und der Kappe gegenüber der Kolbenführung und dem Gehäuse in Umfangsrichtung verdrehen lässt.

Eine dem Werkzeughalter zugewandte Innenkontur der Verriegelungshülse besitzt wenigstens eine in Längsrichtung der Verriegelungshülse verlaufende Vertiefung für ein radial versetzbares, in einer Durchtrittsöffnung des Werkzeughalters geführtes Verriegelungselement. Zweckmässigerweise weist die in Längsrichtung der Verriegelungshülse verlaufende Vertiefung einen Verriegelungsbereich und einen Entriegelungsbereich auf, wobei der Verriegelungsbereich gegenüber dem Entriegelungsbereich eine kleinere radiale Erstreckung aufweist. Überdeckt der Verriegelungsbereich die Durchtrittsöffnung des Werkzeugnalters, so wird das Verriegelungselement radial in die Ausnehmung der Kolbenführung gedrückt, die an der Aussenseite der Kolbenführung angeordnet ist. Überdeckt der Entriegelungsbereich die Durchtrittsöffnung des Werkzeughalters, so kann das Verriegelungselement radial nach aussen entweichen, so dass der Werkzeughalter zusammen mit der Verriegelungshülse von der Kolbenführung abnehmbar ist.

Da die Verriegelung des Werkzeughalters gegenüber der Kolbenführung mit Hilfe des Verriegelungselementes dann stattfinden soll, wenn sich die Vernegelungshülse in der Ausgangsstellung befindet, ist der Entriegelungsbereich zweckmässigerweise zum Gehäuse hin liegend angeordnet. Der Entriegelungsbereich kann somit nur in Überdeckung mit der Durchtrittsöffnung des Werkzeughalters gebracht werden, wenn die Verriegelungshülse gegen die Kraft der Feder in Schlagrichtung versetzt wird.

Dabei kann die drehfeste Verbindung zwischen der Verriegelungshülse und dem Gehäuse gelöst werden, ohne dass der Werkzeughalter von der Kolbenführung abnehmbar ist. Das Aufheben der drehfesten Verbindung dient der Ausrichtung eines in dem Werkzeughalter eingesetzten Werkzeuges. Durch axiales Versetzen der Verriegelungshülse in Schlagrichtung gelangen die Verzahnungen der Verriegelungshülse und des Gehäuses ausser Eingriff, so dass die Verriegelungshülse unter Mitnahme des Werkzeughalters und der Kolbenführung in Umfangsrichtung verdreht werden kann, bis die gewünschte Ausrichtung des Werkzeuges erfolgt ist. Lässt man die Verriegelungshülse anschliessend los, so gelangen beide Verzahnungen wieder in Eingriff mit Hilfe der Kraft der Feder, die sich am Werkzeughalter axial abstützend gegen die Verriegelungshülse drückt. Die Verriegelungshülse wird auf diese Art wieder in ihre Ausgangsstellung verschoben und die drehfeste Verbindung zwischen der Verriegelungshülse und dem Gehäuse bzw. zwischen der Verriegelungshülse und dem Werkzeughalter ist wieder gewährleistet. Damit der Werkzeughalter von der Kolbenführung nicht dann schon abgenommen werden kann, wenn beide Verzahnungen ausser Eingriff sind, ist zweckmässigerweise die axiale Länge des Verriegelungsbereiches grösser als die axiale Länge des dem Eingriff dienenden Überlappungsbereiches der an der Verriegelungshülse und dem Gehäuse angeordneten Verzahnungen.

Ein unbeabsichtigtes Lösen des Werkzeughalters von der Kolbenführung wird verhindert durch eine Begrenzung der axialen Versetzbarkeit der Verriegeiungshüise, die vorzugsweise erreicht wird von einem ersten Anschlag an der Verriegelungshülse und einem zweiten Anschlag an der Kappe, wobei der grösste Abstand zwischen den Anschlägen grösser ist als die axiale Länge des Überlappungsbereiches der an der Verriegelungshülse und dem Gehäuse angeordneten Verzahnungen und kleiner ist als die axiale Länge des Verriegelungsbereiches der Verriegelungshülse. Auf diese Weise kann die Verriegelungshülse nur um eine bestimmte Länge axial versetzt werden, so dass nur die Verzahnungen ausser Eingriff gebracht werden können, ohne dass der Entriegelungsbereich der Verriegelungshülse die Durchtrittsöffnung des Werkzeughalters überdeckt.

Aus wirtschaftlichen und herstelltechnischen Gründen ist der erste Anschlag vorteilhafterweise von der Kante eines an der Verriegelungshülse angeordneten Zahnes und der zweite Anschlag von der Stirnseite der Kappe gebildet.

Um eine Abnahme des Werkzeughalters von der Kolbenführung gewährleisten zu können, muss die Verriegelungshülse axial gegen die Kraft der Feder in Schlagrichtung so weit verschoben werden, bis der Entriegelungsbereich der Verriegelungshülse die Durchtrittsöffnung des Werkzeughalters überdeckt. Die axiale Versetzbarkeit der Verriegelungshülse wird dabei zweckmässigerweise begrenzt von dem ersten Anschlag an der Verriegelungshülse und einem dritten Anschlag an der Kappe, wobei der Abstand zwischen dem ersten Anschlag und dem dritten Anschlag grösser ist als die axiale Länge des Verriegelungsbereiches der Verriegelungshülse.

Der erste Anschlag wird vorzugsweise von der Kante eines an der Verriegelungshülse angeordneten Zahnes und der dritte Anschlag vom Grund einer Vertiefung am stimseitigen Bereich der Kappe gebildet. Damit diese grössere axiale Versetzung der Verriegelungshülse stattfinden kann, muss die Kappe gegenüber der Verriegelungshülse in Umfangsrichtung verdreht werden, bis der erste Anschlag gegenüber dem Dritten Anschlag ausgerichtet ist. Die Kappe ist zu diesem Zweck vorteilhafterweise in Umfangsrichtung gegen die Kraft eines Federelementes verdrehbar.

Die Erfindung wird mit Hilfe von Zeichnungen, die ein Ausführungsbeispiel wiedergeben, näher erläutert. Es zeigen:
- Fig. 1: ein erfindungsgemässes Bohr- und/oder Meisselgerät, schematisch dargestellt;
- Fig. 2: den schlagrichtungsseitigen Endbereich des Bohr- und/oder Meisselgerätes gemäss Fig. 1 in geschnittener, vergrösserter Darstellung.

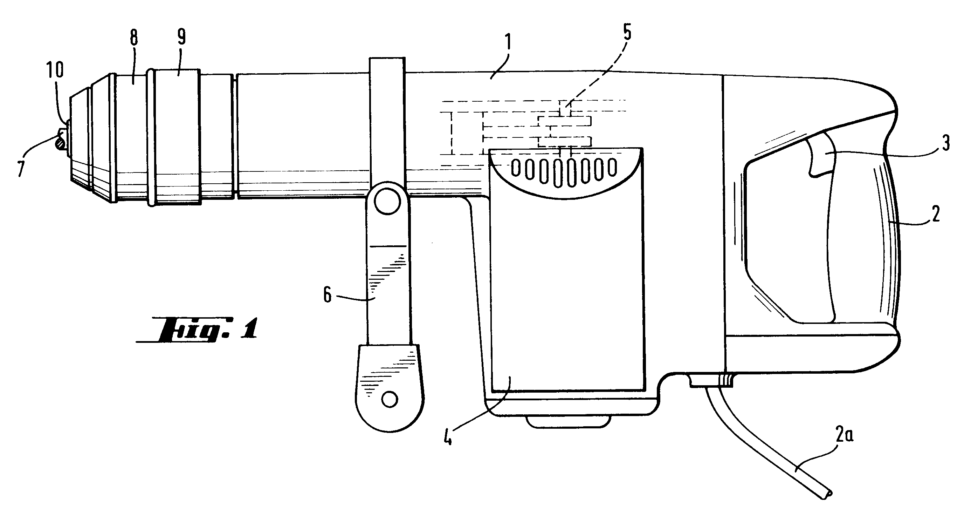

Das in Fig. 1 dargestellte Bohr- und/oder Meisselgerät besitzt ein Gehäuse 1, das in Verbindung steht mit einem Handgriff 2, einem am Handgriff 2 angeordneten Betätigungsschalter 3 für die Inbetriebnahme des Bohr- und/oder Meisselgerätes, einem elektrischen Anschlusskabel 2a, einem nicht näher dargestellten Antriebsmotor 4, einem Schlagwerk 5, einem Seitengriff 6 und einem Werkzeughalter 10, der der Aufnahme eines Werkzeuges 7 dient. Der Werkzeughalter 10 ist umgeben von einer Kappe 8 und einer axial versetzbaren Verriegelungshülse 9.

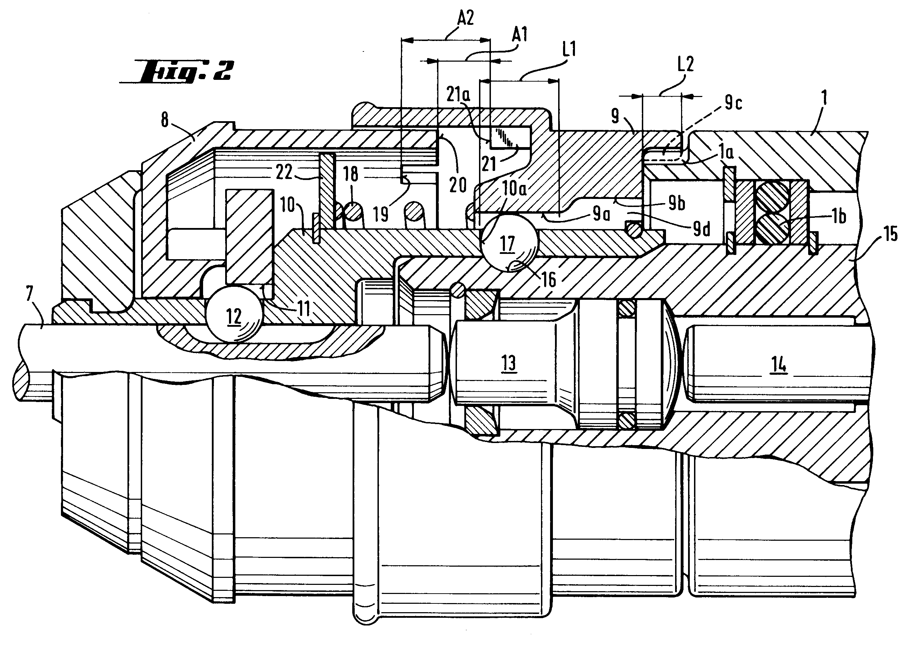

Wie in Fig. 2 dargestellt, befindet sich innerhalb des Gehäuses 1 eine Kolbenführung 15, die sich über Lagerelemente 1b am Gehäuse 1 abstützt und das Gehäuse 1 zumindest teilweise überragt. Im Innern der Kolbenführung 15 befindet sich ein axial frei versetzbarer Schlagkolben 13, der mit Schlagimpulsen eines zum Schlagwerk 5 gehörenden Erregerkolbens 14 beaufschlagt wird.

Der Werkzeughalter 10 des Bohr- und/oder Meisselgerätes besitzt eine im wesentlichen zylindrisch ausgebildete Aufnahmebohrung, die der Aufnahme und der Führung eines Werkzeugschaftes eines Werkzeuges 7 dient. Für die Verriegelung des Werkzeuges 7 weist der Werkzeughalter 10 radial verlaufende Durchgangsbohrungen auf, die der Aufnahme und der Führung wenigstens eines radial versetzbaren Verriegelungselementes 12 in Form einer Kugel dient. Eine den Werkzeughalter 10 umgebende, gegenüber diesem teilweise in Umfangsrichtung gegen die Kraft einer Feder verdrehbare Kappe weist an der Innenkontur eine Steuerkurve 11 auf, mit deren Hilfe das Verriegelungselement 12 radial versetzbar ist, wenn die Kappe 8 gegenüber dem Werkzeughalter 10 in Umfangsrichtung verdreht wird. Das Verriegelungselement 12 ragt dabei in einen beidseitig geschlossenen Längsschlitz des Werkzeugschaftes.

In einem Bereich, der dem Gehäuse zugewandt ist, besitzt der Werkzeughalter 10 eine radial verlaufende Durchtrittsöffnung 10a, die der Aufnahme und der Führung eines Verriegelungselementes 17 in Form einer Kugel dient. Der Werkzeughalter 10 ist auf den überragenden Bereich der Kolbenführung 15 aufsteckbar, so dass der Werkzeughalter 10 mit einem dem Gehäuse 1 zugewandten Endbereich den überragenden Bereich der Kolbenführung 15 umgibt. Die radiale Versetzung des kugelförmigen Verriegelungselementes 17 erfolgt mit Hilfe einer axial gegen die Kraft einer Feder 18 versetzbaren Verriegelungshülse 9, die den Werkzeughalter wenigstens teilweise umgibt. Der überragende Bereich der Kolbenführung 15 besitzt eine am Umfang angeordnete, umlaufend ausgebildete Ausnehmung 16 für das kugelförmige Verriegelungselement 17. An einem gehäuseseitigen Endbereich besitzt die Verrieglungshülse 9 eine Innenverzahnung 9c, deren Zähne in Längsrichtung der Verriegelungshülse 9 verlaufen. Das Gehäuse 1 hat an einem dem Werkzeughalter 10 zugewandten Endbereich eine Aussenverzahnung 1a, deren Zähne ebenfalls in Längsrichtung des Gehäuses 1 verlaufen.

Die Verriegelungshülse 9 wird mit Hilfe einer Feder 18 in ihre Ausgangsstellung gedrückt, wobei die Innenverzahnung 9c der Verriegelungshülse 9 die Aussenverzahnung 1a des Gehäuses um die Länge L2 überlappt. Die Verriegelungshülse 9 ist auf diese Art drehfest mit dem Gehäuse 1 verbunden. An der Innenkontur weist die Verriegelungshülse 9 eine in Längsrichtung der Verriegelungshülse 9 verlaufende Vertiefung 9d für das Verriegelungselement 17 auf. Die Vertiefung 9d hat einen Verriegelungsbereich 9a und einen Entriegelungsbereich 9b. Der Verriegelungsbereich 9a mit der Länge L1 ist länger als der Überlappungsbereich mit der Länge L2 beider Verzahnungen an dem Gehäuse 1 und der Verriegelungshülse 9.

Der Werkzeughalter 10 besitzt eine an der Aussenkontur radial abragende Anschlagschulter 22 für die auf die Verriegelungshülse 9 wirkende Feder 18, die als schraubenförmige Druckfeder ausgebildet ist. Die Verriegelungshülse 9 ist in Schlagrichtung um die Länge A1 axial versetzbar, bis ein erster Anschlag 21a der Verriegelungshülse 9 mit einem zweiten Anschlag 20, der von der Stimseite einer Kappe 8 gebildet wird, anliegt. Der erste Anschlag 21a der Verriegelungshülse 9 wird dabei gebildet von der Kante eines Zahnes 21.

Die dem Gehäuse 1 zugewandte Stirnseite der Kappe 8 besitzt einen dritten Anschlag 19, der gebildet wird vom Grund einer Vertiefung. Durch ein entsprechendes Verdrehen der Kappe 8 gegenüber der Verriegelungshülse 9 in Umfangsrichtung kann der dritte Anschlag 19 gegenüber dem ersten Anschlag 21a an der Verriegelungshülse 9 ausgerichtet werden. Die Verriegelungshülse 9 ist auf diese Weise um eine Länge A2 versetzbar, so dass sowohl die Verzahnungen zwischen Gehäuse 1 und Verriegelungshülse 9 ausser Eingriff sind, als auch die Verriegelungselemente 17 des Werkzeughalters 10 radial nach aussen gelangen können, so dass die dreh- und axialfeste Verbindung zwischen dem Werkzeughalter 10 und der Kolbenführung 15 aufgehoben wird. Der Werkzeughalter 10 ist auf diese Weise von der Kolbenführung 15 bzw. vom Bohr- und/oder Meisselgerät abnehmbar.

## Patentansprüche

1. Bohr- und/oder Meisselgerät mit einem Gehäuse (1), einem Werkzeughalter (10), einer da Gehäuse (1) in Richtung Werkzeughalter (10) überragenden Kolbenführung (15), einer den Werkzeughalter (10) umgebenden, gegenüber diesem zumindest teilweise verdrehbaren Kappe (8) sowie einer gegen die Kraft einer Feder (18) axial versetzbaren Verriegelungshülse (9), wobei die Kolbenführung (15) und der Werkzeughalter (10) über wenigstens ein radial versetzbares, in wenigstens eine Ausnehmung (16) der Kolbenführung (15) eingreifindes und in einer Durchtrittsöffnung (10a) des Werkzeughalters (10) gelagertes Verriegelungselement (17) miteinander verbunden sind die Verriegelungshülse (9) wenigstens eine in Längsrichtung der Verriegelungshülse (9) verlaufende Vertiefung (9d) für das Verriegelungselement (17) aufweist und das Verriegelungselement (17) mittels der axial versetzbaren Verriegelungshülse (9) radial versetzbar ist, **dadurch gekennzeichnet**, dass die Verriegelungshülse (9) und das Gehäuse (1) miteinander in Eingriff bringbare Verzahnungen aufweisen.

2. Bohr- und/oder Meisselgerät nach Anspruch 1, dadurch gekennzeichnet, dass die Verzahnung an dem Gehäuse (1) als in Längsrichtung der Verriegelungshülse (9) verlaufende Aussenverzahnung (1a) und die Verzahnung an der Verriegelungshülse (9) als in Längsrichtung der Verriegelungshülse (9) verlaufende Innenverzahnung (9c) ausgebildet sind.

3. Bohr- und/oder Meisselgerät nach Anspruch 1 oder 2, dadurch gekennzeichnet, dass die in Längsrichtung der Verriegelungshülse (9) verlaufende Vertiefung (9d) einen Verriegelungsbereich (9a) und einen Entriegelungsbereich (9b) aufweist, wobei der Verriegelungsbereich (9a) gegenüber dem Entriegelungsbereich (9b) eine kleinere radiale Erstreckung aufweist.

4. Bohr- und/oder Meisselgerät nach Anspruch 3, dadurch gekennzeichnet, dass der Entriegelungsbereich (9b) zum Gehäuse (1) hin liegend angeordnet ist.

5. Bohr- und/oder Meisselgerät nach Anspruch 3 oder 4, dadurch gekennzeichnet, dass die axiale Länge (L1) des Verriegelungsbereiches (9a) grösser ist als die axiale Länge (L2) des dem Eingriff dienenden Übertappungsbereiches der an der Verriegelungshülse (9) und dem Gehäuse (1) angeordneten Verzahnungen.

6. Bohr- und/oder Meisselgerät nach Anspruch 5, dadurch gekennzeichnet, dass die axiale Versetzbarkeit der Verriegelungshülse (9) begrenzt wird von einem ersten Anschlag (21a) an der Verriegelungshülse (9) und einem zweiten Anschlag (20) an der Kappe (8), wobei der grösste Abstand (A1) zwischen den Anschlägen (21a, 20) grösser ist als die axiale Länge (L2) des Überlappungsbereiches der an der Verriegelungshülse (9) und dem Gehäuse (1) angeordneten Verzahnungen und kleiner ist als die axiale Länge (L1) des Verriegelungsbereiches (9a) der Verriegelungshülse (9).

7. Bohr- und/oder Meisselgerät nach Anspruch 6, dadurch gekennzeichnet, dass der erste Anschlag (21a) von der Kante eines an der Verriegelungshülse (9) angeordneten Zahnes (21) und der zweite Anschlag (20) von der Stirnseite der Kappe (8) gebildet ist.

8. Bohr- und/oder Meisselgerät nach einem der Ansprüche 3 bis 7, dadurch gekennzeichnet, dass die axiale Versetzbarkeit der Verriegelungshülse (9) begrenzt wird von dem ersten Anschlag (21a) an der Verriegelungshülse (9) und einem dritten Anschlag (19) an der Kappe (8), wobei der grösste Abstand (A2) zwischen dem ersten Anschlag (21a) und dem dritten Anschlag (19) grösser ist als die axiale Länge (L1) des Verriegelungsbereiches (9a) der Verriegelungshülse (9).

9. Bohr- und/oder Meisselgerät nach Anspruch 8, dadurch gekennzeichnet, dass der erste Anschlag (21a) von der Kante eines an der Verriegelungshülse (9) angeordneten Zahnes (21) und der dritte Anschlag (19) vom Grund einer Vertiefung am stirnseitigen Bereich der Kappe (8) gebildet wird.

10. Bohr- und/oder Meisselgerät nach einem der Ansprüche 1 bis 9, dadurch gekennzeichnet, dass die Kappe (8) in Umfangsrichtung entgegen der Kraft eines Federelementes verdrehbar ist.

## Claims

1. Drilling and/or chiselling apparatus, comprising a housing (1), a toolchuck (10), a piston guide (15) which protrudes over the housing (1) in the direction of the toolchuck (10), a cap (8) which encapsulates the toolchuck (10) and is at least partially rotary relative to the latter, and a locking sleeve (9) which is axially transposable against the load of a spring (18), and the piston guide (15) and the toolchuck (10) are interconnected by means of at least one locking element (17) which is radially transposable and engages at least one cutout (16) of the piston guide (15) and is mounted in a channel (10a) of the toolchuck (10), the locking sleeve (9) comprises at least one recess (9d) for the locking element (17) which extends in the longitudinal direction of the locking sleeve (9), and the locking element (17) is radially transposable by means of the axially transposable locking sleeve (9), **characterised in that** the locking sleeve (9) and the housing (1) have interengageable toothing.

2. Drilling and/or chiselling apparatus according to Claim 1, **characterised in that** the toothing on the housing (1) is designed as external toothing (1a) which extends in the longitudinal direction of the locking sleeve (9), and the toothing at the locking sleeve (9) is designed as internal toothing (9c) which extends in the longitudinal direction of the locking sleeve (9).

3. Drilling and/or chiselling apparatus according to Claim 1 or 2, **characterised in that** the recess (d) which extends in the longitudinal direction of the locking sleeve (9) comprises a locking area (9a) and an unlocking area (9b), and the locking area (9a) has a smaller radial extent relative to the unlocking area (9b).

4. Drilling and/or chiselling apparatus according to Claim 3, **characterised in that** the unlocking area (9b) is configured to lie towards the housing (1).

5. Drilling and/or chiselling apparatus according to Claim 3 or 4, **characterised in that** the axial length (L1) of the locking area (9a) is larger than the axial length (L2) of the overlap area, which serve to engage, of the toothing configured on the locking sleeve (9) and the housing (1).

6. Drilling and/or chiselling apparatus according to Claim 5, **characterised in that** the axial transposeability of the locking sleeve (9) is defined by a first abutment (21a) on the locking sleeve (9) and a second abutment (20) on the cap (8), and the greatest distance (A1) between the abutments (21a, 20) is greater than the axial length (L2) of the overlap area of the toothing configured on the locking sleeve (9) and the housing (1) and smaller than the axial length (L1) of the locking area (9a) of the locking sleeve (9).

7. Drilling and/or chiselling apparatus according to Claim 6, **characterised in that** the first abutment (21a) is established by the edge of a tooth (21) configured on the locking sleeve (9), and the second abutment (20) is established by the end surface of the cap (8).

8. Drilling and/or chiselling apparatus according to one of Claims 3 to 7, **characterised in that** the axial transposeability of the locking sleeve (9) is defined by the first abutment (21a) at the locking sleeve (9) and a third abutment (19) on the cap (8), and the greatest distance (A2) between the first abutment (21a) and the third abutment (19) is greater than the axial length (L1) of the locking area (9a) of the locking sleeve (9).

9. Drilling and/or chiselling apparatus according to Claim 8, **characterised in that** the first abutment (21a) is established by the edge of a tooth (21) configured on the locking sleeve (9), and the third abutment (19) is established by the bottom of a recess at the endsided area of the cap (8).

10. Drilling and/or chiselling apparatus according to one of Claims 1 to 9, **characterised in that** the cap (8) is rotary in the peripheral direction against the load of a spring element.

## Revendications

1. Outil de forage et/ou de burinage comprenant un carter (1), un porte-outil (10), un guide-piston (15) dépassant du carter (1) en direction du porte-outil (10), une coiffe (8) entourant le porte-outil (10) et pouvant tourner au moins partiellement par rapport à celui-ci, ainsi qu'un manchon de verrouillage (9) pouvant se déplacer axialement à l'encontre de la force d'un ressort (18), le guide-piston (15) et le porte-outil (10) étant reliés entre eux par au moins un élément de verrouillage à déplacement radial (17) qui pénètre dans au moins un logement (16) du guide-piston (15) et qui est logé dans un orifice traversant (10a) du porte-outil (10), le manchon de verrouillage (9) comportant, pour l'élément de verrouillage (17), au moins un renfoncement (9d) orienté dans la direction longitudinale du manchon de verrouillage (3), et l'élément de verrouillage (17) pouvant être déplacé radialement au moyen du manchon de verrouillage à déplacement axial (9), caractérisé en ce que le manchon de verrouillage (9) et le carter (1) comportent des dentures en prise mutuelle.

2. Outil de forage et/ou de burinage selon la revendication 1, caractérisé en ce que la denture située sur le carter (1) est conçue sous la forme d'une denture extérieure (1a) orientée dans la direction longitudinale du manchon de verrouillage (9), et la denture située sur le manchon de verrouillage (9) est conçue sous la forme d'une denture intérieure (9c) orientée dans la direction longitudinale du manchon de verrouillage (9).

3. Outil de forage et/ou de burinage selon la revendication 1 ou 2, caractérisé en ce que le renfoncement (9d) orienté dans la direction longitudinale du manchon de verrouillage (9) comporte une zone de verrouillage (9a) et une zone de déverrouillage (9b), la zone de verrouillage (9a) présentant une extension radiale inférieure à celle de la zone de déverrouillage (9b).

4. Outil de forage et/ou de burinage selon la revendication 3, caractérisé en ce que la zone de déverrouillage (9b) est orientée vers le carter (1).

5. Outil de forage et/ou de burinage selon la revendication 3 ou 4, caractérisé en ce que la longueur axiale (L1) de la zone de verrouillage (9a) est supérieure à la longueur axiale (L2) de la zone d'engrènement des dentures disposées sur le manchon de verrouillage (9) et sur le carter (1).

6. Outil de forage et/ou de burinage selon la revendication 5, caractérisé en ce que la possibilité de déplacement axial du manchon de verrouillage (9) est limitée par une première butée (21a) disposée sur le manchon de verrouillage (9) et par une deuxième butée (20) disposée sur la coiffe (8), la distance maximale (A1) entre les butées (21a, 20) étant supérieure à la longueur axiale (L2) de la zone de chevauchement des dentures disposées sur le manchon de verrouillage (9) et sur le carter (1) et inférieure à la longueur axiale (L1) de la zone de verrouillage (9a) du manchon de verrouillage (9) .

7. Outil de forage et/ou de burinage selon la revendication 6, caractérisé en ce que la première butée (21a) est formée par le bord d'une dent (21) disposée sur le manchon de verrouillage (9), et la seconde butée (20) est formée par la face frontale de la coiffe (8).

8. Outil de forage et/ou de burinage selon l'une des revendications 3 à 7, caractérisé en ce que la possibilité de déplacement axial du manchon de verrouillage (9) est limitée par une première butée (21a) disposée sur le manchon de verrouillage (9) et par une troisième butée (19) disposée sur la coiffe (8), la distance maximale (A2) entre la première butée (21a) et la troisième butée (19) étant supérieure à la longueur axiale (L1) de la zone de verrouillage (9a) du manchon de verrouillage (9).

9. Outil de forage et/ou de burinage selon la revendication 8, caractérisé en ce que la première butée (21a) est formée par le bord d'une dent (21) disposée sur le manchon de verrouillage (9), et la troisième butée (19) est formée par le fond d'un renfoncement ménagé dans la zone frontale de la coiffe (8).

10. Outil de forage et/ou de burinage selon l'une des revendications 1 à 9, caractérisé en ce que la coiffe (8) peut être tournée dans la direction circonférentielle à l'encontre de la force d'un élément élastique.
